# EUROPEAN PATENT APPLICATION

(11) **EP 4 625 187 A1**
(43) Date of publication of application: **01.10.2025**
(21) Application number: 23899595.5
(22) Date of filing: 13.10.2023
(51) Int. Cl.: G06F 12/14

(54) **MEMORY ACCESS CONTROL METHOD AND APPARATUS, AND COMPUTING DEVICE AND COMPUTING DEVICE CLUSTER**

(30) Priority: 09.12.2022 CN 202211577686
(71) Applicant: Huawei Technologies Co., Ltd., Shenzhen, Guangdong 518129 (CN)
(72) Inventor: WANG, Tao, Shenzhen, Guangdong 518129 (CN); JI, Jinxing, Shenzhen, Guangdong 518129 (CN)
(74) Representative: Maiwald GmbH
(86) International application number: PCT/CN2023/124546
(87) International publication number: WO 2024/120014

(57) **Abstract**

This application discloses a memory access control method and apparatus, a computing device, and a computing device cluster, and relates to the field of computer technologies. For each computing unit that accesses a shared memory space, the computing device may use, as an access permission of the computing unit, a computing unit access permission stored in a target page table corresponding to the computing unit, and process a memory access request of each computing unit based on the access permission of the computing unit. The computing device sets a correspondence between a computing unit and a page table, to control an access permission of each computing unit on the shared memory space. This reduces memory damage caused by a malicious operation of a specific computing unit, and improves security of a shared memory.

## Description

### CROSS-REFERENCE TO RELATED APPLICATIONS

This application claims priority to Chinese Patent Application No. 202211577686.1, filed with the China National Intellectual Property Administration on December 9, 2022 and entitled "MEMORY ACCESS CONTROL METHOD AND APPARATUS, COMPUTING DEVICE, AND COMPUTING DEVICE CLUSTER", which is incorporated herein by reference in its entirety.

### TECHNICAL FIELD

This application relates to the field of computer technologies, and in particular, to a memory access control method and apparatus, a computing device, and a computing device cluster.

### BACKGROUND

As a computation amount and complexity of a computing task increase, computing resources required by the computing task increase, and a plurality of computing devices usually need to jointly complete one computing task. For example, in an artificial intelligence (artificial intelligence, AI) application scenario, as a scale of an AI model is increasingly large, computing resources of a single computing device are insufficient to support running of the AI model, and a plurality of computing devices need to be interconnected to form a computing device cluster, to jointly support running of the AI model. In a running process of the AI model, the plurality of computing devices in the computing device cluster need to frequently exchange data, and the plurality of computing devices in the computing device cluster perform mutual access on a shared memory in one address space.

When the plurality of computing devices perform mutual access on the shared memory in the address space, a malicious operation of any memory access member may damage the memory. Therefore, how to improve security of the shared memory is an urgent problem to be resolved.

### SUMMARY

Embodiments of this application provide a memory access control method and apparatus, a computing device, and a computing device cluster, to improve security of a shared memory.

According to a first aspect, an embodiment of this application provides a memory access control method. The method may be applied to a computing device in a computing device cluster. The computing device cluster may include a plurality of computing devices, and each computing device may include one or more computing units. The method may be applied to any computing device. The computing device stores a page table route and a plurality of groups of page tables, and the page table route stores correspondences between object identifiers of a plurality of computing units and the plurality of groups of page tables. Each group of page tables in the plurality of groups of page tables stores a computing unit access permission, and computing unit access permissions stored in different page tables are different.

The memory access control method may include the following steps: It is assumed that a first computing unit is any computing unit in any computing device in the computing device cluster. The computing device obtains a memory access request of a first computing unit, where the memory access request indicates to perform memory access on a shared memory space. The computing device obtains an object identifier of the first computing unit from the memory access request; queries a page table route based on the object identifier of the first computing unit, to determine a target page table corresponding to the first computing unit; and processes the received memory access request based on a computing unit access permission stored in the target page table.

According to the memory access control method provided in this embodiment of this application, for each computing unit that accesses the shared memory space, the computing device may use, as an access permission of the computing unit, a computing unit access permission stored in a target page table corresponding to the computing unit, and process a memory access request of each computing unit based on the access permission of the computing unit. The computing device sets a correspondence between a computing unit and a page table, to control an access permission of each computing unit on the shared memory space. This reduces memory damage caused by a malicious operation of a specific computing unit, and improves security of a shared memory.

In a possible implementation, each group of page tables in the plurality of groups of page tables further stores a memory address mapping relationship; and the memory address mapping relationship is used to determine, when the memory access request is processed, a target address to be accessed by the memory access request. Memory address mapping relationships stored in the plurality of groups of page tables are the same.

For example, the memory address mapping relationship may be a mapping relationship between a virtual address and a physical address. In a memory access process, the memory access request carries a to-be-accessed virtual address. Address translation may be performed based on the mapping relationship between the virtual address and the physical address that are stored in the page table, to translate the to-be-accessed virtual address into a to-be-accessed physical address; and then the memory access request is executed for the memory space corresponding to the to-be-accessed physical address. The memory address mapping relationships stored in the plurality of groups of page tables are the same. It indicates that virtual addresses in the plurality of groups of page tables are mapped to a same memory space. The memory space is the shared memory space, and address translation can be accurately performed via any page table.

In a possible implementation, each group of page tables in the plurality of groups of page tables includes an access permission flag. The access permission flag represents the computing unit access permission, and the computing unit access permission includes a part or all of the following permissions: a read-only permission, a read-write permission, and a write-only permission.

In a possible implementation, the plurality of groups of page tables may include a first group of page tables and a second group of page tables. An access permission flag in the first group of page tables represents that a computing unit access permission is a read-only permission, and an access permission flag in the second group of page tables represents that a computing unit access permission is a read-write permission; or an access permission flag in the first group of page tables represents that a computing unit access permission is a read-write permission, and an access permission flag in the second group of page tables represents that a computing unit access permission is a read-only permission.

In the foregoing implementation, the two groups of page tables are set for the shared memory space. A permission of a computing unit corresponding to one group of page tables on the shared memory space is a read-write permission, and a permission of a computing unit corresponding to the other group of page tables on the shared memory space is a read-only permission. Therefore, a part of the computing units may be set to the read-only permission as required, to reduce a quantity of computing units that may modify data content stored in the shared memory space.

In a possible implementation, the memory access request includes a write operation instruction; and if the computing unit access permission stored in the target page table is a read-write permission or a write-only permission, the write operation instruction in the memory access request is executed; or if the computing unit access permission stored in the target page table is a read-only permission, the memory access request is ignored.

In another possible implementation, the memory access request includes a read operation instruction; and if the computing unit access permission stored in the target page table is a read-write permission or a read-only permission, the read operation instruction in the memory access request is executed; or if the computing unit access permission stored in the target page table is a write-only permission, the memory access request is ignored.

In a possible implementation, the page table route stores correspondences between the object identifiers of the plurality of computing units and page table base address information of the plurality of groups of page tables. The page table route is generated in the following manner: in a process of applying for the shared memory space for a computing task, generating the plurality of groups of page tables for the applied shared memory space; determining the plurality of computing units jointly processing the computing task in the computing device cluster, and setting an access permission for each of the plurality of computing units; separately determining, based on the access permission set for each computing unit and the computing unit access permissions in the plurality of groups of page tables, page tables corresponding to the plurality of computing units; and generating the page table route based on the page tables corresponding to the plurality of computing units, the object identifiers of the plurality of computing units, and the page table base address information of the plurality of groups of page tables.

In a possible implementation, when the target page table corresponding to the first computing unit is determined, the page table route is queried via a page table route control unit, to obtain target page table base address information corresponding to the object identifier of the first computing unit, and the target page table base address information is written into a directory base address register via the page table route control unit, where the target page table base address information is page table base address information of the target page table. The target page table base address information is read from the directory base address register via a memory management unit, and the target page table is determined via the memory management unit based on the target page table base address information.

In the foregoing implementation, the page table route and the page table route control unit are added, so that different access permissions can be set for all the computing units without changing existing hardware such as the memory management unit in the computing device, and permissions of all the computing units can be distinguished and controlled at a finer granularity, to reduce memory damage caused by a malicious operation of a specific computing unit.

In a possible implementation, the object identifier of the first computing unit includes a device number of the computing device to which the first computing unit belongs and an object number of the first computing unit in the computing device to which the first computing unit belongs.

In the foregoing implementation, the object identifier of the computing unit includes the device number of the computing device to which the computing unit belongs, so that the computing device receiving the memory access request can determine the computing device to which the computing unit sending the memory access request belongs.

According to a second aspect, an embodiment of this application provides a memory access control apparatus, used in a computing device in a computing device cluster. Each computing device in the computing device cluster includes at least one computing unit. The apparatus includes:
a request obtaining module, configured to obtain a memory access request of a first computing unit, where the memory access request indicates to perform memory access on a shared memory space, the memory access request includes an object identifier of the first computing unit, and the first computing unit is any computing unit in any computing device in the computing device cluster; and
a request processing module, configured to: query a page table route based on the object identifier of the first computing unit, to determine a target page table corresponding to the first computing unit; and process the memory access request based on a computing unit access permission stored in the target page table, where the page table route stores correspondences between object identifiers of a plurality of computing units and a plurality of groups of page tables, each group of page tables in the plurality of groups of page tables stores a computing unit access permission, and computing unit access permissions stored in the plurality of groups of page tables are different.

In a possible implementation, each group of page tables in the plurality of groups of page tables further stores a memory address mapping relationship; the memory address mapping relationship is used to determine, when the memory access request is processed, a target address to be accessed by the memory access request; and memory address mapping relationships stored in the plurality of groups of page tables are the same.

In a possible implementation, each group of page tables in the plurality of groups of page tables includes an access permission flag, the access permission flag represents the computing unit access permission, and the computing unit access permission includes a part or all of the following permissions: a read-only permission, a read-write permission, and a write-only permission.

In a possible implementation, the memory access request includes a write operation instruction, and the request processing module is specifically configured to:
if the computing unit access permission stored in the target page table is a read-write permission or a write-only permission, execute the write operation instruction in the memory access request; or
if the computing unit access permission stored in the target page table is a read-only permission, ignore the memory access request.

In another possible implementation, the memory access request includes a read operation instruction, and the request processing module is specifically configured to:
if the computing unit access permission stored in the target page table is a read-write permission or a read-only permission, execute the read operation instruction in the memory access request; or
if the computing unit access permission stored in the target page table is a write-only permission, ignore the memory access request.

In a possible implementation, the page table route stores correspondences between the object identifiers of the plurality of computing units and page table base address information of the plurality of groups of page tables, and the page table route is generated in the following manner:
in a process of applying for the shared memory space for a computing task, generating the plurality of groups of page tables for the applied shared memory space, where the memory address mapping relationship stored in the plurality of groups of page tables is a memory address mapping relationship for the shared memory space;
determining the plurality of computing units jointly processing the computing task in the computing device cluster, and setting an access permission for each of the plurality of computing units;
separately determining, based on the access permission set for each computing unit and the computing unit access permissions in the plurality of groups of page tables, page tables corresponding to the plurality of computing units; and
generating the page table route based on the page tables corresponding to the plurality of computing units, the object identifiers of the plurality of computing units, and the page table base address information of the plurality of groups of page tables.

In a possible implementation, the request processing module is specifically configured to:
query the page table route via a page table route control unit, to obtain target page table base address information corresponding to the object identifier of the first computing unit, and write the target page table base address information into a directory base address register via the page table route control unit, where the target page table base address information is page table base address information of the target page table; and
read the target page table base address information from the directory base address register via a memory management unit, and determine the target page table via the memory management unit based on the target page table base address information.

According to a third aspect, an embodiment of this application provides a computing device, including a storage and a processor. The storage stores a computer program, and the processor is configured to read and execute the computer program stored in the storage, so that any method provided in the first aspect is performed.

According to a fourth aspect, an embodiment of this application provides a computing device cluster, including a plurality of computing devices. Each computing device includes a processor and a storage. The storage stores a computer program that can be run on the processor, and the processor is configured to read and execute the computer program stored in the storage, so that any method provided in the first aspect is performed.

In a possible implementation, the plurality of computing devices include a primary device and an acceleration device.

According to a fifth aspect, an embodiment of this application provides a computer-readable storage medium. The computer-readable storage medium stores computer-executable instructions, and the computer-executable instructions are used to enable a computer to perform any method provided in the first aspect.

According to a sixth aspect, an embodiment of this application provides a computer program product, including computer-executable instructions. The computer-executable instructions are used to enable a computer to perform any method provided in the first aspect.

For technical effect that can be achieved in any one of the second aspect to the sixth aspect, refer to descriptions of beneficial effect in the first aspect. Details are not described herein again.

### BRIEF DESCRIPTION OF DRAWINGS

FIG. 1 is a diagram of a structure of a computing device cluster according to an embodiment of this application;
FIG. 2 is a diagram of a structure of another computing device cluster according to an embodiment of this application;
FIG. 3 is a diagram of a plurality of groups of page tables set for a shared memory space according to an embodiment of this application;
FIG. 4 is a diagram of a memory address mapping relationship according to an embodiment of this application;
FIG. 5 is a diagram of a page table route according to an embodiment of this application;
FIG. 6 is a diagram of interaction between computing devices in a memory access process according to an embodiment of this application;
FIG. 7 is a logic diagram of a memory access control method according to an embodiment of this application;
FIG. 8 is a flowchart of a memory access control method according to an embodiment of this application;
FIG. 9 is a diagram of a structure of a memory access control apparatus according to an embodiment of this application;
FIG. 10 is a diagram of a structure of another memory access control apparatus according to an embodiment of this application; and
FIG. 11 is a diagram of a structure of a computing device according to an embodiment of this application.

### DESCRIPTION OF EMBODIMENTS

To make objectives, technical solutions, and advantages of embodiments of this application clearer, the following describes embodiments of this application in detail with reference to accompanying drawings. Terms used in implementations of this application are only used to explain specific embodiments of this application, but are not intended to limit this application.

Before specific solutions provided in embodiments of this application are described, some terms in this application are explained and described, to facilitate understanding by a person skilled in the art, but not to limit the terms in this application.
(1) An acceleration device is configured to offload some functions of a primary device. For example, a data processing function, not suitable for processing by the primary device, in a network, a storage, or an operating system may be offloaded to the acceleration device, to release computing power of the primary device. The acceleration device may be connected to the primary device in a plug-in manner. The acceleration device may include but is not limited to a component having an offload function, like a data processing unit (data processing unit, DPU), an infrastructure processing unit (infrastructure processing unit, IPU), a smart graphics card, an iNIC, or a smart NIC. The iNIC or the smart NIC may be understood as an intelligent network interface card. The acceleration device may include a plurality of accelerators, and each accelerator may be understood as a computing unit.

In embodiments of this application, "a plurality of" means two or more. In view of this, in embodiments of this application, "a plurality of" may also be understood as "at least two". "At least one" may be understood as one or more, for example, one, two, or more. For example, including at least one means including one, two, or more", and there is no limitation on which is included. For example, if at least one of A, B, and C is included, A, B, C, A and B, A and C, B and C, or A, B, and C may be included. The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects.

Unless otherwise specified, ordinal numbers such as "first" and "second" in embodiments of this application are used to distinguish between a plurality of objects, but are not intended to limit a sequence, a time sequence, priorities, or importance of the plurality of objects.

To improve security of a shared memory and reduce memory damage caused by a malicious operation of a memory access member, embodiments of this application provide a memory access control method. The method may be applied to a computing device in a computing device cluster, and each computing device in the computing device cluster may include at least one computing unit. The computing device stores a page table route and a plurality of groups of page tables. The page table route stores correspondences between object identifiers of a plurality of computing units and the plurality of groups of page tables. Each group of page tables in the plurality of groups of page tables stores a computing unit access permission. The computing device receives a memory access request of a first computing unit, and may obtain an object identifier that is of the first computing unit and that is carried in the memory access request. The first computing unit may be any computing unit in any computing device in the computing device cluster. The memory access request of the first computing unit indicates to perform memory access on a shared memory space in the computing device. The computing device may query the page table route based on the object identifier of the first computing unit, determine a target page table corresponding to the first computing unit, and process the memory access request based on a computing unit access permission stored in the target page table.

According to the foregoing method, for each computing unit that can access the shared memory space, the computing device may use, as an access permission of the computing unit, a computing unit access permission stored in a target page table corresponding to the computing unit, and process a memory access request of each computing unit based on the access permission of the computing unit. The computing device sets a correspondence between a computing unit and a page table, to control an access permission of each computing unit on the shared memory space. This reduces memory damage caused by a malicious operation of a specific computing unit, and improves the security of the shared memory.

The following describes, with reference to accompanying drawings, the memory access control method provided in embodiments of this application.

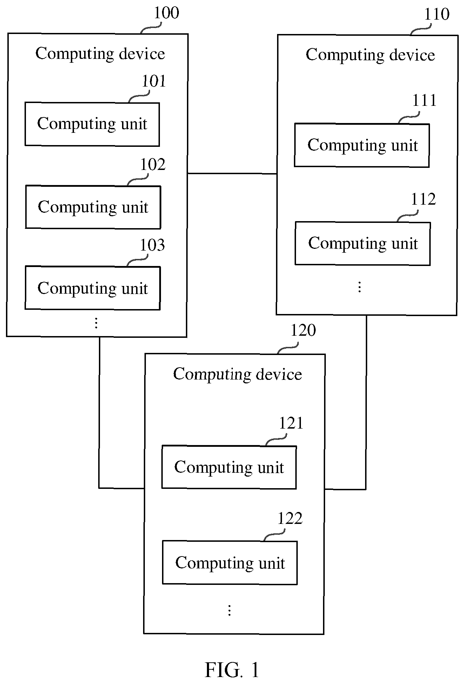

The memory access control method provided in embodiments of this application may be applied to a computing device cluster. FIG. 1 is an example diagram of a structure of a computing device cluster. The computing device cluster may be applied to a cloud computing scenario, and the computing device cluster may be a computing system based on a heterogeneous network (heterogeneous network). The heterogeneous network may include computing devices produced by different manufacturers, and these computing devices may run over different network protocols. For example, the computing device cluster may be understood as a device cluster including a plurality of computing devices in a computing data center. The computing data center may provide a cloud computing service for a tenant by using a cloud computing technology. The plurality of computing devices in the computing data center may execute a computing task specified by the tenant, and return a processing result of the computing task to the tenant. The computing device cluster may include a plurality of computing devices, the plurality of computing devices are connected to each other, and each computing device may be understood as a computer or a server in the computing data center.

FIG. 1 shows three computing devices in the computing device cluster: a computing device 100, a computing device 110, and a computing device 120. Each computing device may include one or more computing units, and different computing devices may include a same quantity of computing units or different quantities of computing units. For example, the computing device 100 may include a computing unit 101, a computing unit 102, a computing unit 103, and the like. The computing device 110 may include a computing unit 111, a computing unit 112, and the like. The computing device 120 may include a computing unit 121, a computing unit 122, and the like. In another embodiment, each computing device may include more or fewer computing units. This is not limited in this application. The computing unit may include a software computing unit, and may also include a hardware computing unit. For example, an operating system of the computing device may be used as a software computing unit, an operating system of a virtual machine running in the computing device may also be used as a software computing unit, and an application running in the computing device may also be used as a software computing unit. A computing chip, a processor chip, and the like in the computing device may be used as hardware computing units.

A plurality of computing devices in the computing device cluster may share a memory. For example, a memory is disposed in each computing device. The memory may be referred to as an internal memory, and is configured to temporarily store operation data of a processor and data exchanged between the processor and an external memory like a hard disk. The memory is a bridge for communication between the external memory and the processor. In a running process of the computing device, an operating system or an application schedules, from the memory to the processor for operation, data on which operation needs to be performed, and then stores an operation result of the processor in the memory. The plurality of computing devices may form a shared memory pool via respective memories, and a computing unit in the computing device may access the shared memory pool.

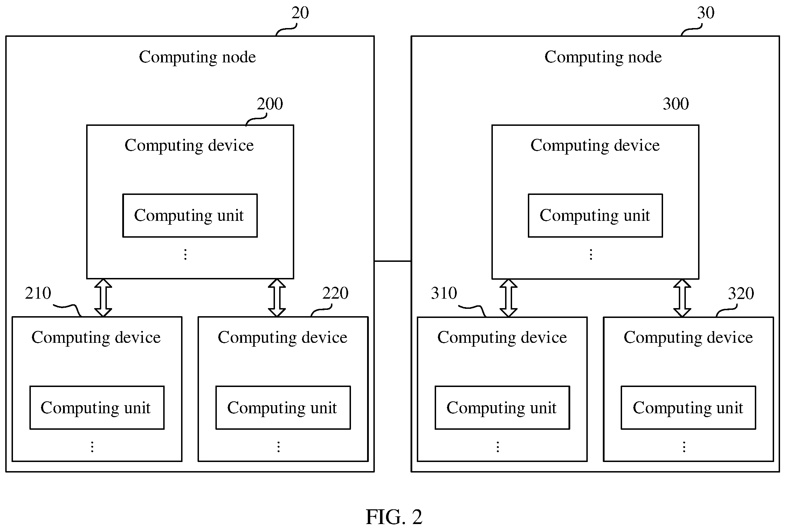

FIG. 2 is an example diagram of a structure of another computing device cluster. The computing device cluster may include a plurality of computing devices, for example, a computing device 200, a computing device 210, a computing device 220, a computing device 300, a computing device 310, and a computing device 320 shown in FIG. 2. The computing device 200, the computing device 210, and the computing device 220 may form a computing node 20. The computing device 200 may be used as a primary device (host) in the computing node. The computing device 210 and the computing device 220 may be used as two acceleration devices (devices) connected to the primary device. Each acceleration device may include one or more accelerators. The accelerator may also be referred to as a hardware accelerator, and is hardware configured to accelerate AI computing. For example, the hardware accelerator may accelerate AI computing such as matrix computing, vector computing, and image preprocessing. The acceleration device may be plugged into an input/output (input output, IO) interface of the primary device, and is connected to the primary device through a bus. The acceleration device may be configured to offload some functions of the host. For example, it is assumed that the acceleration device is an intelligent network interface card. In this case, the acceleration device may run an AI model used for image processing, to implement an image recognition or processing process. The computing device 300, the computing device 310, and the computing device 320 may form a computing node 30. The computing device 300 may be used as a primary device in the computing node, and the computing device 310 and the computing device 320 may be used as two acceleration devices connected to the primary device. In another embodiment, each primary device may be connected to more or fewer acceleration devices. This is not limited in this application.

A computing unit is disposed in each of the primary device and the acceleration device. For example, a virtual machine running in the primary device, a computing chip or a processor chip in the primary device, and the like may be used as computing units. A computing chip, a hardware accelerator, or the like in the acceleration device may also be used as a computing unit.

Any two computing devices in the plurality of computing devices in the computing device cluster may be communicatively connected to each other. For example, an acceleration device in the computing node 20 may access a memory in a primary device in the computing node 30, and may also access a memory in an acceleration device in the computing node 30.

The plurality of computing devices in the computing device cluster may share a memory. In other words, both a primary device and an acceleration device may participate in memory sharing. For example, a memory is disposed in each primary device and each secondary device. A plurality of primary devices and a plurality of secondary devices may form a shared memory pool via respective memories. A computing unit in the computing device may access the shared memory pool.

The plurality of computing devices in the computing device cluster may collaborate to execute one computing task. The computing task may be a computing task of a tenant, or may be a computing task of a computing data center. For example, if a tenant needs to process an image, the tenant may send an image processing request to the computing data center, the computing data center may generate, based on the image processing request, a computing task for performing image processing based on an AI model, and the plurality of computing devices in the computing device cluster may jointly execute the computing task for image processing, to implement an image processing process.

When a plurality of computing devices jointly execute one computing task, one of the plurality of computing devices may be used as a control (master) device to apply for a shared memory space for the computing task. It is assumed that a first computing device, a second computing device, a third computing device, and a fourth computing device jointly execute a computing task a. The first computing device is used as a master to apply for a shared memory space for the computing task a, and the shared memory space applied for by the first computing device may be located in a memory of the first computing device, or may be located in a memory of another computing device.

In some embodiments, the shared memory space applied for by the first computing device for the computing task a may be located in the memory of the first computing device. In a process of applying for the shared memory space for the computing task a, the first computing device may generate a plurality of groups of page tables for the applied shared memory space. Each group of page tables in the plurality of groups of page tables stores a memory address mapping relationship for the shared memory space, and the memory address mapping relationship is used to determine, when a memory access request is processed, a target address accessed by the memory access request.

The memory address mapping relationship for the shared memory space may be a mapping relationship between a virtual address and a physical address of the shared memory space. A function of the memory address mapping relationship is as follows: During memory access, a memory access unit may send a memory access request to the first computing device, where the memory access request carries a to-be-accessed virtual address; and the first computing device may translate the to-be-accessed virtual address into a to-be-accessed physical address based on the mapping relationship between the virtual address and the physical address stored in the page table, and then execute the memory access request for the memory space corresponding to the to-be-accessed physical address.

Each group of page tables in the plurality of groups of page tables may further store a computing unit access permission. Memory address mapping relationships stored in the plurality of groups of page tables are the same. In other words, the plurality of groups of page tables map the physical address of the same memory. Computing unit access permissions stored in the plurality of groups of page tables are different.

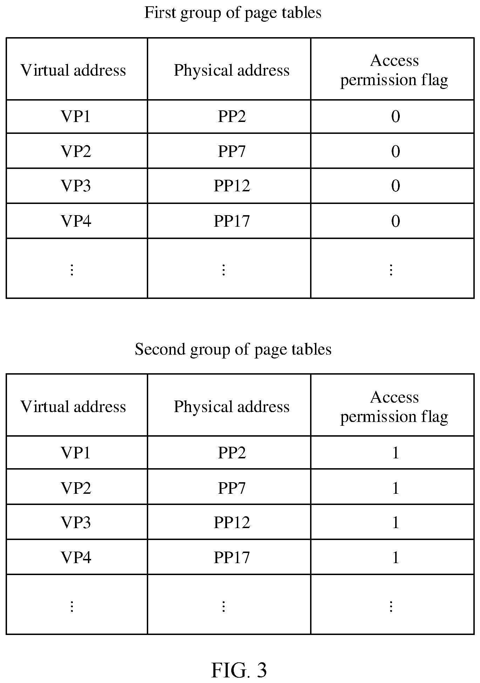

In some embodiments, as shown in FIG. 3, the first computing device may generate two groups of page tables for the applied shared memory space. Each group of page tables may include a mapping relationship between a virtual address and a physical address and an access permission flag. The access permission flag represents the computing unit access permission. The access permission flag occupies 1 bit. A value "0" of an access permission flag in a first group of page tables indicates a read-write permission, and a value "1" of an access permission flag in a second group of page tables indicates a read-only permission. A physical address PP2 corresponds to a virtual address VP1, a physical address PP7 corresponds to a virtual address VP2, a physical address PP12 corresponds to a virtual address VP3, and the like.

In some other embodiments, the first computing device may generate three groups of page tables for the applied shared memory space. Each group of page tables may include a mapping relationship between a virtual address and a physical address and an access permission flag. The access permission flag represents the computing unit access permission. The access permission flag may occupy 2 bits. A value "00" of an access permission flag in a first group of page tables represents a read-write permission, a value "01" of an access permission flag in a second group of page tables represents a read-only permission, and a value "10" of an access permission flag in a third group of page tables represents a write-only permission. A physical address PP2 corresponds to a virtual address VP1, a physical address PP7 corresponds to a virtual address VP2, a physical address PP12 corresponds to a virtual address VP3, and the like.

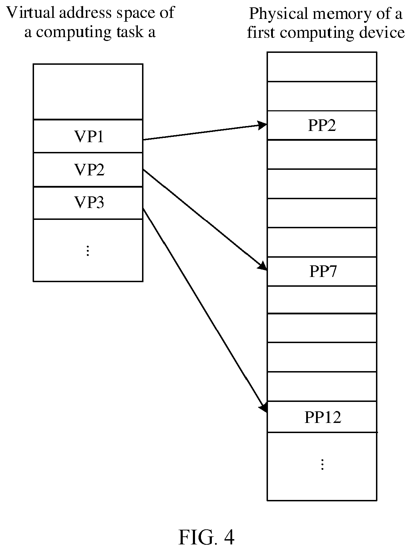

As shown in FIG. 4, the physical address PP2 corresponding to the virtual address VP1 represents an address VP1 in a virtual address space of the computing task a, and corresponds to an address PP2 in a physical memory of the first computing device. The physical address PP7 corresponding to the virtual address VP2 represents an address VP2 in the virtual address space of the computing task a, and corresponds to an address PP7 in the physical memory of the first computing device.

In the process of applying for the shared memory space for the computing task a, the first computing device may determine a plurality of computing units jointly processing the computing task a in the computing device cluster, and share the shared memory space with the plurality of computing units jointly processing the computing task a, that is, all the plurality of computing units jointly processing the computing task a may access the shared memory space. The first computing device may set an access permission for each of the plurality of computing units, separately determine, based on the access permission set for each computing unit and computing unit access permissions in the plurality of groups of page tables, page tables corresponding to the plurality of computing units, and generate a page table route, based on the page tables corresponding to the plurality of computing units, object identifiers of the plurality of computing units, and page table base address information of the plurality of groups of page tables.

It is assumed that a computing unit A1 and a computing unit A2 in the first computing device, a computing unit B1 and a computing unit B2 in the second computing device, and a computing unit C1, a computing unit C2, and a computing unit C3 in the third computing device jointly execute the computing task a. The computing unit A1 may be an operating system of the first computing device, and may also be referred to as a kernel mode of the first computing device. The computing unit A2 may be an application running in the first computing device, and may also be referred to as a user mode of the first computing device. The computing unit A1, the computing unit A2, the computing unit B1, the computing unit B2, the computing unit C1, the computing unit C2, and the computing unit C3 may all access the shared memory space of the computing task a.

The first computing device may set an access permission for each computing unit based on a requirement of each computing unit for executing a computing task, separately determine a page table corresponding to each computing unit, and generate a page table route based on the page table corresponding to each computing unit.

For example, in some embodiments, access permissions set by the first computing device for the computing units may be a read-write permission for the computing unit A1, a read-only permission for the computing unit A2, a read-only permission for the computing unit B1, a read-write permission for the computing unit B2, a read-only permission for the computing unit C1, a read-only permission for the computing unit C2, and a read-write permission for the computing unit C3. The first computing device may separately determine, based on the access permission set for each computing unit, the page tables corresponding to the plurality of computing units. For example, the computing unit A1, the computing unit B2, and the computing unit C3 correspond to the first group of page tables in FIG. 3, and the computing unit A2, the computing unit B1, the computing unit C1, and the computing unit C2 correspond to the second group of page tables in FIG. 3.

The first computing device obtains page table base address information of the first group of page tables and page table base address information of the second group of page tables, where the page table base address information indicates storage space of the page tables in a memory. The first computing device may generate the page table route based on the object identifier of each computing unit, the page table base address information of the first group of page tables, and the page table base address information of the second group of page tables. The object identifier of each computing unit may be obtained by the first computing device in advance, for example, may be obtained by the first computing device in a phase of creating the computing task a. An object identifier of any computing unit may include a number of a computing device to which the computing unit belongs and a number of the computing unit in the computing device to which the computing unit belongs. The computing unit A1 is used as an example. A computing device to which the computing unit A1 belongs is the first computing device, a device number of the first computing device, namely, a device number, is S106, and an object number of the computing unit A1 in the first computing device is 0080. In this case, the most significant 4 bits of an object identifier of the computing unit A1 may be the device number S106, or the least significant 4 bits of encoded information obtained by performing input/output virtual address (input output virtual address, IOVA) encoding on the device number may be the object number 0080.

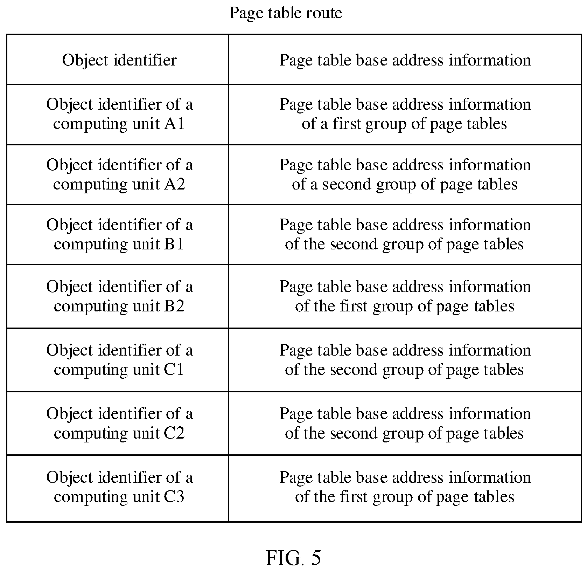

As shown in FIG. 5, the page table route generated by the first computing device may include correspondences between the object identifier of each computing unit and the page table base address information of the plurality of groups of page tables. For example, an object identifier of the computing unit A1 corresponds to the page table base address information of the first group of page tables; an object identifier of the computing unit A2 corresponds to the page table base address information of the second group of page tables; same as that of the computing unit A2, an object identifier of the computing unit B1 corresponds to the page table base address information of the second group of page tables; and same as that of the computing unit A1, an object identifier of the computing unit B2 corresponds to the page table base address information of the first group of page tables.

In some other embodiments, access permissions set by the first computing device for the computing units may be a read-write permission for the computing unit A1, a write-only permission for the computing unit A2, a read-only permission for the computing unit B1, a read-write permission for the computing unit B2, a read-only permission for the computing unit C1, a write-only permission for the computing unit C2, and a read-write permission for the computing unit C3. It is assumed that an access permission flag in a first group of page tables represents a read-write permission, an access permission flag in a second group of page tables represents a read-only permission, and an access permission flag in a third group of page tables represents a write-only permission. The first computing device may separately determine, based on the access permission set for each computing unit, the page tables corresponding to the plurality of computing units. For example, the computing unit A1, the computing unit B2, and the computing unit C3 correspond to the first group of page tables, the computing unit B1 and the computing unit C1 correspond to the second group of page tables, and the computing unit A2 and the computing unit C2 correspond to the third group of page tables.

The first computing device obtains page table base address information of the first group of page tables, page table base address information of the second group of page tables, and page table base address information of the third group of page tables. The first computing device may generate the page table route based on the object identifier of each computing unit, the page table base address information of the first group of page tables, the page table base address information of the second group of page tables, and the page table base address information of the third group of page tables. The page table route generated by the first computing device may include correspondences between the object identifier of each computing unit and the page table base address information of the plurality of groups of page tables. For example, an object identifier of the computing unit A1, an object identifier of the computing unit B2, and an object identifier of the computing unit C3 correspond to the page table base address information of the first group of page tables, an object identifier of the computing unit A2 and an object identifier of the computing unit C2 correspond to the page table base address information of the third group of page tables, and an object identifier of the computing unit B1 and an object identifier of the computing unit C1 correspond to the page table base address information of the second group of page tables.

It should be noted that the shared memory space applied for by the first computing device for the computing task a may be located in the memory of the first computing device, or may be located in a memory of another computing device in the computing device cluster.

In some embodiments, if the shared memory space applied for by the first computing device for the computing task a is located in the memory of the first computing device, the first computing device generates and stores a plurality of groups of page tables and a page table route. The first computing device may further send virtual address information of the computing task a to a computing device to which all computing units jointly executing the computing task a belong, so that the computing units can access the shared memory space of the computing task a based on the virtual address information of the computing task a. In an embodiment, the first computing device may further send information indicating that the shared memory space is located in the first computing device to a computing device to which all computing units jointly executing the computing task a belong.

In some other embodiments, if the shared memory space applied for by the first computing device for the computing task a is located in a memory of the second computing device, the first computing device generates a plurality of groups of page tables and a page table route, and then sends the plurality of groups of page tables and the page table route to the second computing device for storage by the second computing device. The first computing device may further send virtual address information of the computing task a to all computing units jointly executing the computing task a, so that the computing units can access the shared memory space of the computing task a based on the virtual address information of the computing task a. In an embodiment, the first computing device may further send information indicating that the shared memory space is located in the second computing device to a computing device to which all computing units jointly executing the computing task a belong.

In some embodiments, the first computing device may generate and maintain a page table route via software or hardware in a trusted execution environment (trusted execution environment, TEE). For example, the page table route is generated and maintained in a secure mode like a kernel mode, and the page table route cannot be modified in a user mode or an insecure mode.

For a process in which another computing device in the computing device cluster applies for a shared memory space for a computing task, refer to the foregoing process in which the first computing device applies for the shared memory space for the computing task a. Details are not described herein again.

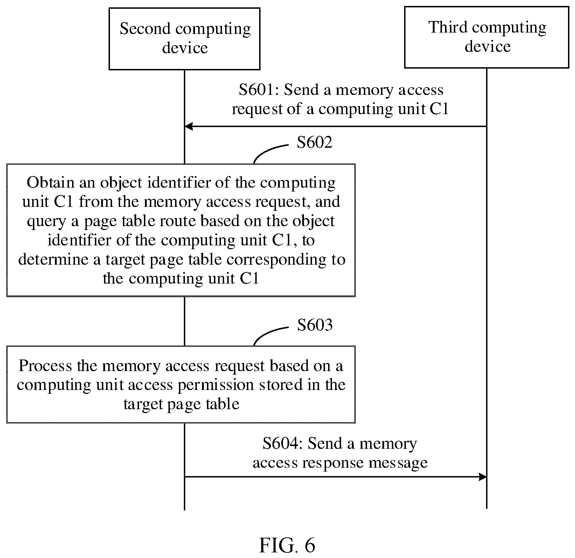

In a process of executing the computing task a, any computing unit may access the shared memory space applied for the computing task a. It is assumed that the shared memory space is located in the memory of the second computing device. The computing unit C1 is used as an example for description. The computing unit C1 is a computing unit in the third computing device. In a process in which the computing unit C1 accesses the shared memory space, as shown in FIG. 6, a process of interaction between the third computing device and the second computing device includes the following steps.

S601: The third computing device sends a memory access request of the computing unit C1 to the second computing device.

In some embodiments, when the computing unit C1 needs to access the shared memory space in a process of executing the computing task a, the computing unit C1 determines a virtual address of the to-be-accessed memory space, and generates the memory access request including the to-be-accessed virtual address. The memory access request indicates to perform memory access on the shared memory space. In an embodiment, the third computing device may broadcast the memory access request to the plurality of computing devices in the computing device cluster. After receiving the memory access request broadcast by the third computing device, the second computing device determines that the to-be-accessed virtual address carried in the memory access request is located in the local memory, and responds to the memory access request. In another embodiment, the third computing device may determine, based on the to-be-accessed virtual address, that the to-be-accessed memory space is located in the memory of the second computing device, and send the memory access request to the second computing device.

Before sending the memory access request, the third computing device may add the object identifier of the computing unit C1 to the memory access request. For example, the object identifier of the computing unit C1 may be added to the to-be-accessed virtual address. In some embodiments, the third computing device may be an acceleration device connected to a primary device. The acceleration device has a direct memory access (direct memory access, DMA) capability, and may directly access a memory space of another computing device. If the third computing device is an acceleration device connected to a primary device, an input/output memory management unit (input/output memory management unit, IOMMU) is disposed in the third computing device, the IOMMU may provide an address translation function, and the third computing device may process the to-be-accessed virtual address via the IOMMU, and add the object identifier of the computing unit C1 to the to-be-accessed virtual address.

S602: The second computing device obtains the object identifier of the computing unit C1 from the memory access request, and queries the page table route based on the object identifier of the computing unit C1, to determine a target page table corresponding to the computing unit C1.

S603: The second computing device processes the memory access request based on a computing unit access permission stored in the target page table.

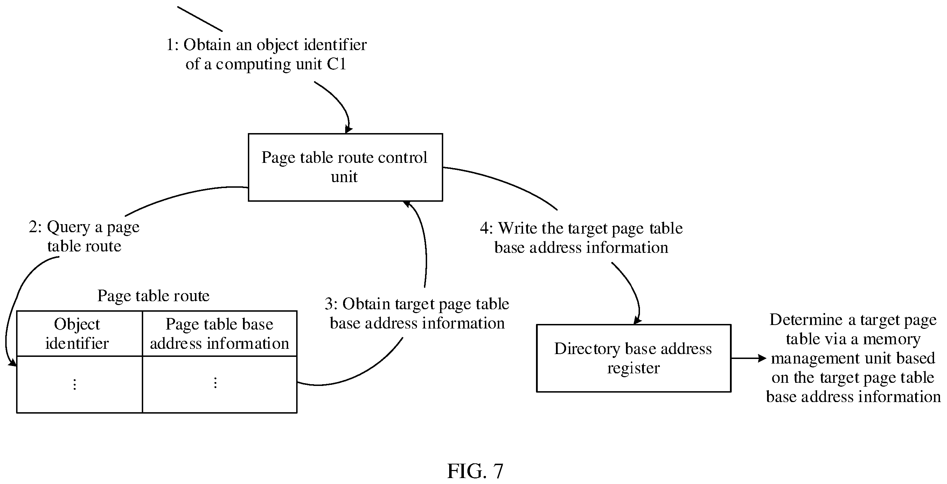

FIG. 7 shows an example of a process in which the second computing device processes the memory access request after receiving the memory access request. A page table route control unit and a memory management unit (memory management unit, MMU) are disposed in the second computing device. As shown in FIG. 7, after obtaining the object identifier of the computing unit C1 from the memory access request, the second computing device may query the page table route via the page table route control unit, to obtain target page table base address information corresponding to the object identifier of the computing unit C1. The target page table base address information is page table base address information of the target page table corresponding to the computing unit C1. The second computing device may write the target page table base address information into a directory base address register via the page table route control unit, and then start an addressing operation of memory access. In a memory access addressing process, the target page table base address information is read from the directory base address register via the memory management unit, and the target page table is determined via the memory management unit based on the target page table base address information. For example, corresponding to the page table route shown in FIG. 5, the second computing device may determine that a page table corresponding to the computing unit C1 is a second page table, that is, the second page table is the target page table. A page table structure may remain unchanged by modifying the directory base address register. Therefore, a subsequent addressing process may remain unchanged, that is, addressing logic of a general-purpose memory management unit is not required. After the target page table is determined, the memory access request may be processed via the memory management unit based on the computing unit access permission stored in the target page table. If the second computing device is an acceleration device connected to a primary device, the memory management unit may be an IOMMU.

In some embodiments, it is assumed that the memory access request includes a write operation instruction for the to-be-accessed virtual address. If the computing unit access permission stored in the target page table is a read-write permission, or the computing unit access permission stored in the target page table is a write-only permission, the write operation instruction in the memory access request is executed; or if the computing unit access permission stored in the target page table is a read-only permission, the memory access request is ignored. For example, for the memory access request sent by the computing unit C1, the computing unit access permission stored in the second page table is a read-only permission. Therefore, the second computing device ignores the memory access request, and does not execute the write operation instruction in the memory access request.

In some other embodiments, it is assumed that the memory access request includes a read operation instruction for the to-be-accessed virtual address. If the computing unit access permission stored in the target page table is a read-write permission, or the computing unit access permission stored in the target page table is a read-only permission, the read operation instruction in the memory access request is executed; or if the computing unit access permission stored in the target page table is a write-only permission, the memory access request is ignored. For example, for the memory access request sent by the computing unit C1, the computing unit access permission stored in the second page table is a read-only permission. Therefore, the second computing device may execute the read operation instruction in the memory access request. The second computing device may determine, based on a mapping relationship between a virtual address and a physical address that are stored in the second group of page tables, a target physical address corresponding to the to-be-accessed virtual address in the memory access request, and read, from a memory space corresponding to the target physical address, data required by the computing unit C1.

S604: The second computing device sends a memory access response message to the third computing device.

If the second computing device ignores the memory access request, the memory access response message sent to the third computing device may be a notification message indicating access permission mismatch. If the second computing device executes the memory access request, the memory access response message sent to the third computing device may be an execution result. For example, if the memory access request includes the read operation instruction, the second computing device sends, to the third computing device, the data read from the shared memory space; and if the memory access request includes the write operation instruction, the second computing device sends, to the third computing device, a notification message indicating that the data has been written into the memory.

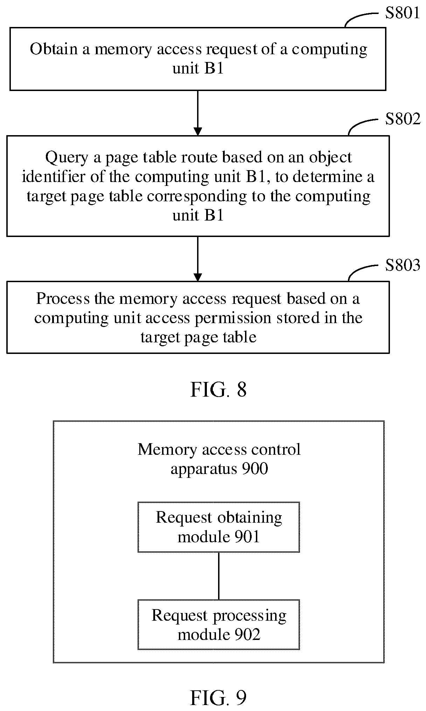

It is assumed that the shared memory space is located in the memory of the second computing device. If the computing unit B1 in the second computing device accesses the shared memory space, as shown in FIG. 8, a processing process performed by the second computing device or a memory access control apparatus in the second computing device may include the following steps.

S801: Obtain a memory access request of the computing unit B1.

In some embodiments, when the computing unit B1 needs to access the shared memory space in a process of executing the computing task a, the computing unit B1 determines a virtual address of the to-be-accessed memory space, and generates the memory access request including the to-be-accessed virtual address. The memory access request indicates to perform memory access on the shared memory space. The second computing device may add an object identifier of the computing unit B1 to the memory access request. For example, the object identifier of the computing unit B1 may be added to the to-be-accessed virtual address.

The computing unit B1 sends the memory access request including the object identifier of the computing unit B1 to the memory access control apparatus in the second computing device. In other words, the memory access control apparatus in the second computing device obtains the memory access request of the computing unit B1.

S802: Query the page table route based on the object identifier of the computing unit B1, to determine a target page table corresponding to the computing unit B1.

The memory access control apparatus in the second computing device obtains the object identifier of the computing unit B1 from the memory access request, and queries the page table route based on the object identifier of the computing unit B1, to determine the target page table corresponding to the first computing unit.

S803: Process the memory access request based on a computing unit access permission stored in the target page table.

After obtaining the object identifier of the computing unit B1 from the memory access request, the memory access control apparatus of the second computing device may query the page table route via the page table route control unit, to obtain target page table base address information corresponding to the object identifier of the computing unit B1. The target page table base address information is page table base address information of the target page table corresponding to the computing unit B1. The page table route control unit may write the target page table base address information into the directory base address register, and the memory management unit reads the target page table base address information from the directory base address register, and determines the target page table based on the target page table base address information. For example, corresponding to the page table route shown in FIG. 5, the second computing device may determine that a page table corresponding to the computing unit B1 is a second page table, that is, the second page table is the target page table.

After the target page table is determined, the memory access request may be processed via the memory management unit based on the computing unit access permission stored in the target page table. For a specific process of processing the memory access request, refer to step S603. Details are not described herein again.

For a process in which another computing unit in the second computing device accesses the shared memory space, refer to the procedure shown in FIG. 8. Details are not described herein again.

The memory access control method provided in embodiments of this application not only is used to distinguish between an access permission of a local device and an access permission of another device, but also may be used to set different access permissions for each computing unit in the local device and each computing unit in the another device. Therefore, the permissions of all the computing units can be distinguished and controlled at a finer granularity, to reduce memory damage caused by a malicious operation of a specific computing unit. In this embodiment of this application, the page table route and the page table route control unit are added, so that different access permissions can be set for all the computing units without changing existing hardware such as the memory management unit and the processor in the computing device.

Based on a same inventive concept as the foregoing embodiment, an embodiment of this application further provides a memory access control apparatus. The memory access control apparatus may be used in a computing device in a computing device cluster. The memory access control apparatus may be configured to implement functions of the method embodiment shown in FIG. 8 or functions of the second computing device shown in FIG. 6, and therefore can achieve beneficial effect of the foregoing method embodiment.

As shown in FIG. 9, the memory access control apparatus 900 may include a request obtaining module 901 and a request processing module 902. When the memory access control apparatus 900 is configured to implement functions in the foregoing method embodiment, the request obtaining module 901 is configured to obtain a memory access request of a first computing unit, where the memory access request indicates to perform memory access on a shared memory space, the memory access request includes an object identifier of the first computing unit, and the first computing unit is any computing unit in any computing device in the computing device cluster. The request processing module 902 is configured to: query a page table route based on the object identifier of the first computing unit, to determine a target page table corresponding to the first computing unit; and process the memory access request based on a computing unit access permission stored in the target page table, where the page table route stores correspondences between object identifiers of a plurality of computing units and a plurality of groups of page tables, each group of page tables in the plurality of groups of page tables stores a computing unit access permission, and computing unit access permissions stored in the plurality of groups of page tables are different. Both the request obtaining module 901 and the request processing module 902 may be implemented by software, or may be implemented by hardware.

In some embodiments, if the memory access request includes a write operation instruction, the request processing module 902 may be specifically configured to: if the computing unit access permission stored in the target page table is a read-write permission or a write-only permission, execute the write operation instruction in the memory access request; or if the computing unit access permission stored in the target page table is a read-only permission, ignore the memory access request.

In some other embodiments, if the memory access request includes a read operation instruction, the request processing module 902 may be specifically configured to: if the computing unit access permission stored in the target page table is a read-write permission or a read-only permission, execute the read operation instruction in the memory access request; or if the computing unit access permission stored in the target page table is a write-only permission, ignore the memory access request.

In some embodiments, the page table route may be generated by a computing device to which the memory access control apparatus 900 belongs. In some other embodiments, the page table route may alternatively be generated by another computing device, and then sent to the computing device to which the memory access control apparatus 900 belongs for storage. For example, the page table route stores correspondences between the object identifiers of the plurality of computing units and page table base address information of the plurality of groups of page tables. The page table route is generated in the following manner: in a process of applying for the shared memory space for a computing task, generating the plurality of groups of page tables for the applied shared memory space, where the memory address mapping relationship stored in the plurality of groups of page tables is a memory address mapping relationship for the shared memory space; determining the plurality of computing units jointly processing the computing task in the computing device cluster, and setting an access permission for each of the plurality of computing units; separately determining, based on the access permission set for each computing unit and the computing unit access permissions in the plurality of groups of page tables, page tables corresponding to the plurality of computing units; and generating the page table route based on the page tables corresponding to the plurality of computing units, the object identifiers of the plurality of computing units, and the page table base address information of the plurality of groups of page tables.

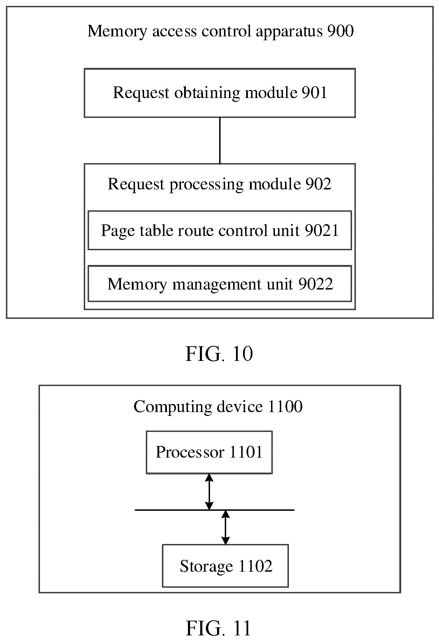

In some embodiments, as shown in FIG. 10, the request processing module 902 may include a page table route control unit 9021 and a memory management unit 9022. The page table route control unit 9021 and the memory management unit 9022 may be implemented by software, or may be implemented by hardware. The request processing module 902 may be specifically configured to: query the page table route via the page table route control unit 9021, to obtain target page table base address information corresponding to the object identifier of the first computing unit, and write the target page table base address information into a directory base address register via the page table route control unit, where the target page table base address information is page table base address information of the target page table; and read the target page table base address information from the directory base address register via the memory management unit 9022, and determine the target page table via the memory management unit based on the target page table base address information.

In some other embodiments, the request processing module 902 may be software, and the page table route control unit and the memory management unit may be hardware in the computing device. The request processing module 902 may query the page table route via the page table route control unit 9021, to obtain target page table base address information corresponding to the object identifier of the first computing unit, and write the target page table base address information into a directory base address register; and read the target page table base address information from the directory base address register via the memory management unit 9022, and determine the target page table via the memory management unit based on the target page table base address information.

It should be noted that, in another embodiment, the request obtaining module 901 may be configured to perform any step in a configuration method, the request processing module 902 may be configured to perform any step in the configuration method, and steps implemented by the request obtaining module 901 and the request processing module 902 may be specified based on a requirement. The request obtaining module 901 and the request processing module 902 respectively implement different steps in the configuration method, to implement all functions of a configuration apparatus.

Based on a same technical concept as the foregoing method embodiment, an embodiment of this application further provides a computing device. The computing device may be any computing device in the computing device cluster shown in FIG. 1 or FIG. 2. The computing device may be configured to implement functions of the method embodiment shown in FIG. 8 or functions of the second computing device shown in FIG. 6, and therefore can achieve beneficial effect of the foregoing method embodiment.

In some embodiments, a structure of the computing device 1100 may be shown in FIG. 11, and includes a processor 1101 and a storage 1102 connected to the processor 1101. The processor 1101 and the storage 1102 may be connected to each other through a bus. The processor 1101 may be used as a main processor of the computing device 1100, that is, a control core of the computing device 1100. The bus may be a peripheral component interconnect (peripheral component interconnect, PCI) bus, an extended industry standard architecture (extended industry standard architecture, EISA) bus, or the like. The bus may be classified into an address bus, a data bus, a control bus, or the like. A specific medium of connection between the processor 1101 and the storage 1102 is not limited in embodiments of this application.

The storage 1102 may include the foregoing memory. The storage 1102 may be a volatile memory, for example, a random access memory. Alternatively, the storage may be a nonvolatile memory, for example, a read-only memory ROM, a flash memory, a hard disk drive (hard disk drive, HDD), or a solid-state drive (solid-state drive, SSD). Alternatively, the storage 1102 is any other medium that can be used to carry or store expected program code in a form of an instruction or a data structure and that can be accessed by a computer, but is not limited thereto. The storage 1102 may be a combination of the foregoing storages. The storage 1102 may be configured to store a software program and a module.

The processor 1101 may include one or more processors. The processor 1101 runs the software program and the module that are stored in the storage 1102, to perform various function applications and data processing of the computing device 1100, for example, the configuration method provided in embodiments of this application.

In some embodiments, the computing device 1100 may further include a data transmission interface, and the data transmission interface is connected to the processor 1101 and the storage 1102 through a bus. The data transmission interface may be configured to communicate with another computing device in the computing device cluster.

For example, when the computing device 1100 is configured to implement the memory access control method provided in embodiments of this application, the processor 1101 may obtain a memory access request of a first computing unit, where the memory access request indicates to perform memory access on a shared memory space, the memory access request includes an object identifier of the first computing unit, and the first computing unit is any computing unit in any computing device in the computing device cluster. The processor 1101 may query a page table route based on the object identifier of the first computing unit, to determine a target page table corresponding to the first computing unit; and process the memory access request based on a computing unit access permission stored in the target page table, where the page table route stores correspondences between object identifiers of a plurality of computing units and a plurality of groups of page tables, each group of page tables in the plurality of groups of page tables stores a computing unit access permission, and computing unit access permissions stored in the plurality of groups of page tables are different.

It may be understood that, the structure illustrated in embodiments of this application does not constitute a specific limitation on a send device. In some other embodiments of this application, the send device may include more or fewer components than those shown in the figure, combine some components, split some components, or have different component arrangements. The components shown in the figure may be implemented by hardware, software, or a combination of software and hardware.

Based on a same technical concept as the foregoing method embodiment, an embodiment of this application further provides a computing device cluster. The computing device cluster may be the computing device cluster shown in FIG. 1 or FIG. 2, and the computing device cluster may include a plurality of computing devices shown in FIG. 11.

In some embodiments, a part of the plurality of computing devices may be a primary device, and the other part of the computing devices may be an acceleration device connected to the primary device.

The method steps in embodiments of this application may be implemented by hardware, or may be implemented by the processor by executing a computer program or instructions. The computer program or the instructions may constitute a computer program product.

An embodiment of this application further provides a computer program product, including computer-executable instructions. In an embodiment, the computer-executable instructions are used to enable a computer to perform functions in the foregoing method embodiment.

The computer-executable instructions may be stored in a computer-readable storage medium. An embodiment of this application further provides a computer-readable storage medium. The computer-readable storage medium stores executable instructions. In an embodiment, the computer-executable instructions are used to enable a computer to perform functions in the foregoing method embodiment.

The computer-readable storage medium provided in this embodiment of this application may be a random access memory (random access memory, RAM), a flash memory, a ROM, a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of computer-readable storage medium well-known in the art.

The computer-executable instructions may be stored in the computer-readable storage medium, or may be transmitted from a computer-readable storage medium to another computer-readable storage medium. For example, a computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, or may be an optical medium, for example, a digital video disc (digital video disc, DVD), or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In addition, the terms "include", "have", or any variant thereof are intended to cover non-exclusive inclusion, for example, include a series of steps or units. A method, system, product, or device is not necessarily limited to those steps or units expressly listed, but may include another step or unit not expressly listed or inherent to such a process, method, product, or device.

Although this application is described with reference to specific features and embodiments thereof, it is clear that various modifications and combinations may be made to this application without departing from the spirit and scope of this application. Correspondingly, this specification and the accompanying drawings are merely example descriptions of solutions defined by the appended claims, and are considered as any or all of modifications, variations, combinations, or equivalents that fall within the scope of this application.

It is clearly that a person skilled in the art can make various modifications and variations to this application without departing from the scope of this application. In this case, this application is intended to cover these modifications and variations of embodiments of this application provided that they fall within the scope of protection defined by the following claims and their equivalent technologies.

## Claims

1. A memory access control method, applied to a computing device in a computing device cluster, wherein each computing device in the computing device cluster comprises at least one computing unit; and the method comprises:
obtaining a memory access request of a first computing unit, wherein the memory access request indicates to perform memory access on a shared memory space, the memory access request comprises an object identifier of the first computing unit, and the first computing unit is any computing unit in any computing device in the computing device cluster;
querying a page table route based on the object identifier of the first computing unit, to determine a target page table corresponding to the first computing unit, wherein the page table route stores correspondences between object identifiers of a plurality of computing units and a plurality of groups of page tables, each group of page tables in the plurality of groups of page tables stores a computing unit access permission, and computing unit access permissions stored in the plurality of groups of page tables are different; and
processing the memory access request based on a computing unit access permission stored in the target page table.

2. The method according to claim 1, wherein each group of page tables in the plurality of groups of page tables further stores a memory address mapping relationship; the memory address mapping relationship is used to determine, when the memory access request is processed, a target address to be accessed by the memory access request; and memory address mapping relationships stored in the plurality of groups of page tables are the same.

3. The method according to claim 1 or 2, wherein each group of page tables in the plurality of groups of page tables comprises an access permission flag, the access permission flag represents the computing unit access permission, and the computing unit access permission comprises a part or all of the following permissions: a read-only permission, a read-write permission, and a write-only permission.

4. The method according to claim 3, wherein the plurality of groups of page tables comprise a first group of page tables and a second group of page tables, an access permission flag in the first group of page tables represents that a computing unit access permission is a read-only permission, and an access permission flag in the second group of page tables represents that a computing unit access permission is a read-write permission.

5. The method according to any one of claims 1 to 3, wherein the memory access request comprises a write operation instruction, and the processing the memory access request based on a computing unit access permission stored in the target page table comprises:
if the computing unit access permission stored in the target page table is a read-write permission or a write-only permission, executing the write operation instruction in the memory access request; or
if the computing unit access permission stored in the target page table is a read-only permission, ignoring the memory access request.

6. The method according to any one of claims 1 to 3, wherein the memory access request comprises a read operation instruction, and the processing the memory access request based on a computing unit access permission stored in the target page table comprises:
if the computing unit access permission stored in the target page table is a read-write permission or a read-only permission, executing the read operation instruction in the memory access request; or
if the computing unit access permission stored in the target page table is a write-only permission, ignoring the memory access request.

7. The method according to any one of claims 1 to 6, wherein the page table route stores correspondences between the object identifiers of the plurality of computing units and page table base address information of the plurality of groups of page tables, and the page table route is generated in the following manner:
in a process of applying for the shared memory space for a computing task, generating the plurality of groups of page tables for the applied shared memory space, wherein the memory address mapping relationship stored in the plurality of groups of page tables is a memory address mapping relationship for the shared memory space;
determining the plurality of computing units jointly processing the computing task in the computing device cluster, and setting an access permission for each of the plurality of computing units;
separately determining, based on the access permission set for each computing unit and the computing unit access permissions in the plurality of groups of page tables, page tables corresponding to the plurality of computing units; and
generating the page table route based on the page tables corresponding to the plurality of computing units, the object identifiers of the plurality of computing units, and the page table base address information of the plurality of groups of page tables.

8. The method according to claim 7, wherein the querying a page table route based on the object identifier of the first computing unit, to determine a target page table corresponding to the first computing unit comprises:
querying the page table route via a page table route control unit, to obtain target page table base address information corresponding to the object identifier of the first computing unit, and writing the target page table base address information into a directory base address register via the page table route control unit, wherein the target page table base address information is page table base address information of the target page table; and
reading the target page table base address information from the directory base address register via a memory management unit MMU, and determining the target page table via the memory management unit based on the target page table base address information.

9. The method according to any one of claims 1 to 8, wherein the object identifier of the first computing unit comprises a device number of the computing device to which the first computing unit belongs and an object number of the first computing unit in the computing device to which the first computing unit belongs.

10. A memory access control apparatus, used in a computing device in a computing device cluster, wherein each computing device in the computing device cluster comprises at least one computing unit; and the apparatus comprises:
a request obtaining module, configured to obtain a memory access request of a first computing unit, wherein the memory access request indicates to perform memory access on a shared memory space, the memory access request comprises an object identifier of the first computing unit, and the first computing unit is any computing unit in any computing device in the computing device cluster; and
a request processing module, configured to: query a page table route based on the object identifier of the first computing unit, to determine a target page table corresponding to the first computing unit; and process the memory access request based on a computing unit access permission stored in the target page table, wherein the page table route stores correspondences between object identifiers of a plurality of computing units and a plurality of groups of page tables, each group of page tables in the plurality of groups of page tables stores a computing unit access permission, and computing unit access permissions stored in the plurality of groups of page tables are different.

11. The apparatus according to claim 10, wherein each group of page tables in the plurality of groups of page tables further stores a memory address mapping relationship; the memory address mapping relationship is used to determine, when the memory access request is processed, a target address to be accessed by the memory access request; and memory address mapping relationships stored in the plurality of groups of page tables are the same.

12. The apparatus according to claim 10 or 11, wherein each group of page tables in the plurality of groups of page tables comprises an access permission flag, the access permission flag represents the computing unit access permission, and the computing unit access permission comprises a part or all of the following permissions: a read-only permission, a read-write permission, and a write-only permission.

13. The apparatus according to any one of claims 10 to 12, wherein the memory access request comprises a write operation instruction; and the request processing module is specifically configured to:
if the computing unit access permission stored in the target page table is a read-write permission or a write-only permission, execute the write operation instruction in the memory access request; or
if the computing unit access permission stored in the target page table is a read-only permission, ignore the memory access request.

14. The apparatus according to any one of claims 10 to 12, wherein the memory access request comprises a read operation instruction; and the request processing module is specifically configured to:
if the computing unit access permission stored in the target page table is a read-write permission or a read-only permission, execute the read operation instruction in the memory access request; or
if the computing unit access permission stored in the target page table is a write-only permission, ignore the memory access request.

15. The apparatus according to any one of claims 10 to 14, wherein the page table route stores correspondences between the object identifiers of the plurality of computing units and page table base address information of the plurality of groups of page tables, and the page table route is generated in the following manner:
in a process of applying for the shared memory space for a computing task, generating the plurality of groups of page tables for the applied shared memory space, wherein the memory address mapping relationship stored in the plurality of groups of page tables is a memory address mapping relationship for the shared memory space;
determining the plurality of computing units jointly processing the computing task in the computing device cluster, and setting an access permission for each of the plurality of computing units;
separately determining, based on the access permission set for each computing unit and the computing unit access permissions in the plurality of groups of page tables, page tables corresponding to the plurality of computing units; and
generating the page table route based on the page tables corresponding to the plurality of computing units, the object identifiers of the plurality of computing units, and the page table base address information of the plurality of groups of page tables.

16. The apparatus according to claim 15, wherein the request processing module is specifically configured to:
query the page table route via a page table route control unit, to obtain target page table base address information corresponding to the object identifier of the first computing unit, and write the target page table base address information into a directory base address register via the page table route control unit, wherein the target page table base address information is page table base address information of the target page table; and
read the target page table base address information from the directory base address register via a memory management unit MMU, and determine the target page table via the memory management unit based on the target page table base address information.

17. A computing device, comprising a storage and a processor, wherein the storage stores a computer program that can be run on the processor, and when the computer program is executed by the processor, the processor is enabled to implement the method according to any one of claims 1 to 9.

18. A computing device cluster, comprising a plurality of computing devices, wherein
each computing device comprises a processor and a storage, wherein the storage stores a computer program that can be run on the processor, and when the computer program is executed by the processor, the processor is enabled to implement the method according to any one of claims 1 to 9.

19. The computing device cluster according to claim 18, wherein the plurality of computing devices comprise a primary device and an acceleration device.

20. A computer-readable storage medium, wherein the computer-readable storage medium stores computer-executable instructions, and the computer-executable instructions are used to enable a computer to perform the method according to any one of claims 1 to 9.

21. A computer program product, comprising computer-executable instructions, wherein the computer-executable instructions are used to enable a computer to perform the method according to any one of claims 1 to 9.
